# EUROPEAN PATENT SPECIFICATION

(11) **EP 2 208 663 B1**
(45) Date of publication and mention of the grant of the patent: **09.05.2012**
(21) Application number: 09700147.3
(22) Date of filing: 05.03.2009
(51) Int. Cl.: B62J 17/04, B62J 6/02

(54) **SADDLE-RIDING VEHICLE**
GRÄTSCHSITZ-FAHRZEUG
VÉHICULE À CONDUITE DE TYPE À CALIFOURCHON

(30) Priority: 07.03.2008 JP 2008058621; 07.03.2008 JP 2008058731
(43) Date of publication of application: 21.07.2010
(73) Proprietor: Yamaha Hatsudoki Kabushiki Kaisha, Iwata-shi, Shizuoka-ken (JP)
(72) Inventor: OISHI, Takayuki, Shizuoka-ken 438-8501 (JP); OKADA, Takeshi, Shizuoka-ken 438-8501 (JP)
(74) Representative: Schoppe, Fritz
(86) International application number: PCT/JP2009/054206
(87) International publication number: WO 2009/110568

(56) References cited:
- EP-A1- 1 914 155
- JP-A- 4 191 185
- JP-A- 9 240 541
- JP-A- 62 203 881
- JP-A- 2002 166 870

## Description

### Technical Field

The present invention relates to a straddle-type vehicle including a windscreen that reduces running wind blowing a rider according to the preamble of claim 1. Such a windscreen is disclosed in JP-A-62-203881.

### Background Art

Hitherto, there has been a motorcycle in which a windscreen for reducing running wind blowing a rider is provided on a front cowling. In a vehicle of Patent Document 1, the windscreen is arranged so as to extend obliquely upward from a headlight. Further, in this vehicle, there is provided a cover which extends obliquely upward along right and left edges of the windscreen, and the cover covers a rear section of the headlight from right and left. The right and left edges of the windscreen are attached to the covers.
[Patent Document 1] JP 2007-186128 A

### Disclosure of the Invention

### Problems to be Solved by the Invention

In the vehicle including the windscreen, a windscreen having a large breadth is sometimes desired for the purpose of improving an exterior appearance of the vehicle, and so on. However, in the case of increasing the breadth of the windscreen, it is difficult to ensure rigidity of the windscreen. Further, in the vehicle of Patent Document 1, attachment positions for the covers are provided only on right and left edges of the windscreen. In the vehicle as described above, in the case of increasing the breadth of the windscreen, there is a possibility of a lower section of the windscreen being insufficiently supported.

The present invention has been made in consideration for the above-mentioned problems. It is an object of the present invention to provide a straddle-type vehicle capable of easily ensuring the rigidity and support strength of the windscreen even in the case where the breadth of the windscreen is increased.

### Means for solving the Problems

In order to solve the above-mentioned problems, a straddle-type vehicle of the present invention is provided with: a headlight arranged at a front of a steering head pipe; a cover arranged so as to cover a rear section of the headlight; and a windscreen arranged above the headlight. The windscreen includes: a front screen section arranged so as to extend upward from the headlight and be inclined rearward; and right and left side screen sections located to the right and left of the front screen section and arranged so as to be bent obliquely downward with respect to the front screen section. Further, attachment portions attached to the headlight or the cover are provided in a lower portion of the front screen section and lower portions of the side screen sections. Lower edges of the side screen sections are located at positions lower than a lower edge of the front screen section, and the attachment portions of the side screen sections are located at positions lower than the attachment portions of the front screen section.

According to the present invention, the right and left side screen sections are bent with respect to the front screen section, thereby making it easy to ensure the rigidity of the windscreen. For example, the rigidity can be higher than that of a flat plate-shaped windscreen. Further, the attachment portions are provided on the lower portion of the front screen section and the lower portions of the side screen sections, and accordingly, sufficient support strength can be ensured for a lower section of the windscreen. Further, the attachment portions of the side screen sections are provided at the positions lower than the attachment portions of the front screen section. The support strength of the windscreen can be further enhanced in such a manner that heights of the attachment portions differ from each other as described above. For example, in comparison with a case where a plurality of the attachment portions are located at the same height, the support strength of the windscreen can be enhanced.

### Brief Description of the Drawings

Fig. 1 is a left side view of a motorcycle according to an embodiment of the present invention.
Fig. 2 is a side view of a front section of the motorcycle, which illustrates a front cowling in a state of being attached to a vehicle body.
Fig. 3 is a front view of the front cowling.
Fig. 4 is a perspective view of the front cowling.
Fig. 5 is a left side view of the front cowling.
Fig. 6 is a left side view of a headlight of the front cowling.
Fig. 7 is a front view of a windscreen of the front cowling.
Fig. 8 is a left side view of the windscreen.
Fig. 9 is a perspective view of a lower cover of the front cowling.
Fig. 10 is a perspective view of a reflector of the headlight.
Fig. 11 is a front view of the reflector, which illustrates a state where the lower cover and the windscreen are attached thereto.
Fig. 12 is a front view of the reflector, which illustrates a state where the lower cover and the windscreen are detached therefrom.
Fig. 13 is a side view of the reflector.
Fig. 14 is a cross-sectional view of a front cowling according to another embodiment of the present invention.

### Best Mode of carrying out the Invention

Description will be given of an embodiment of the present invention while referring to the drawings. Note that in the following drawings, the same or similar reference symbols are assigned to the same or similar sections and portions. However, the drawings are schematic, and it should be noted that ratios of the respective dimensions and the like are different from actual ones. Hence, specific dimensions and the like should be determined in consideration of the following description. Further, it is a matter of course that sections and portions in which dimensional relationships and ratios are different among the drawings are also included.

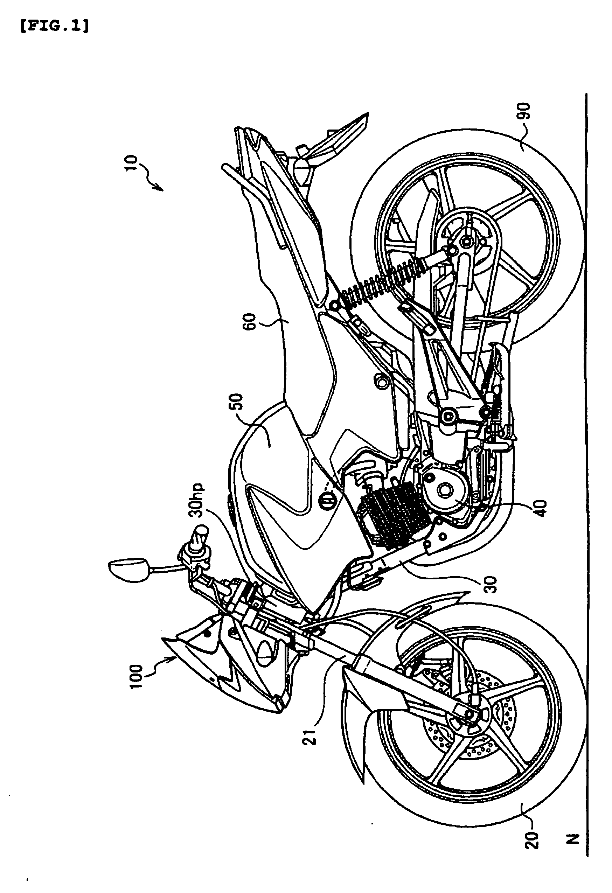

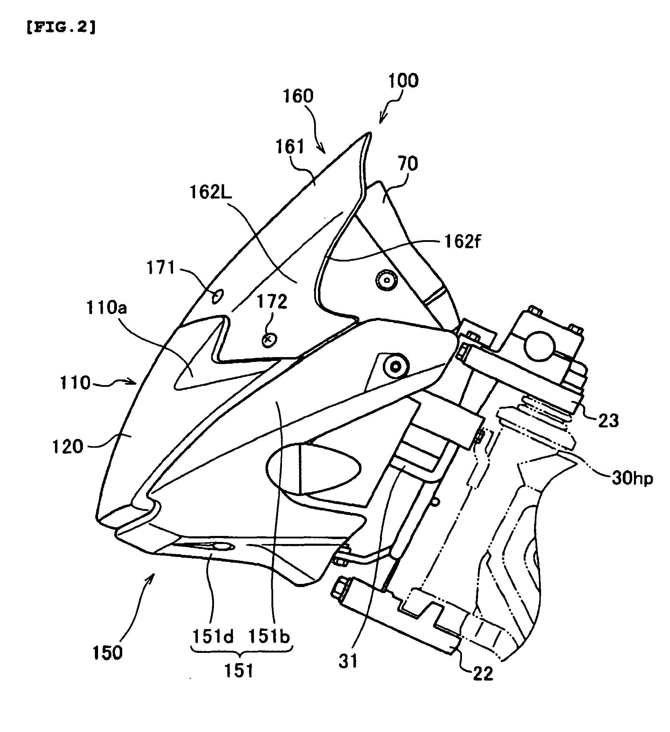

Fig. 1 is a left side view of a motorcycle 10 as an example of a straddle-type vehicle according to the present invention. Fig. 2 is a side view of a front section of the motorcycle 10, which illustrates a front cowling 100 in a state of being attached to a vehicle body.

As illustrated in Fig. 1, the motorcycle 10 includes an engine 40, a front wheel 20 and a rear wheel 90, and drives the rear wheel 90 by driving force generated by the engine 40. The engine 40 is supported by a body frame 30 that serves as a skeleton of the motorcycle 10.

A fuel tank 50 that stores fuel supplied to the engine 40 is arranged above the engine 40. A seat 60 on which a rider is seated in a straddling fashion is arranged rearward of the fuel tank 50.

The front wheel 20 is rotatably supported at lower ends of a pair of right and left front forks 21. As illustrated in Fig. 2, the front forks 21 are supported so as to be rotatable right and left by a steering head pipe 30hp positioned at a front end of the body frame 30. In detail, a steering shaft (not shown) is inserted through the steering head pipe 30hp. Further, a bottom bridge 22 and a top bridge 23 are bridged across the upper part of the front forks 21. An upper end and lower end of the steering shaft are respectively attached to the top bridge 23 and the bottom bridge 22, whereby the front forks 21 rotate right and left about the steering shaft. The front cowling 100 is arranged at the front of the steering head pipe 30hp.

Together with a meter unit 70, the front cowling 100 is attached to the bottom bridge 22 and the top bridge 23. In this example, a stay 31 is attached to the bottom bridge 22 and the top bridge 23. The stay 31 is positioned rearward of a headlight 110 of the front cowling 100, and is attached to the headlight 110. In such a way, the headlight 110 is supported by the bottom bridge 22 and the top bridge 23 while interposing the stay 31 therebetween. In the meter unit 70, there are provided a speed meter that displays a running speed of the motorcycle 10, and the like. As described later, the front cowling 100 includes a windscreen 160. The meter unit 70 is positioned rearward of the windscreen 160. The front cowling 100 includes a lower cover 150 and the windscreen 160 in addition to the headlight 110.

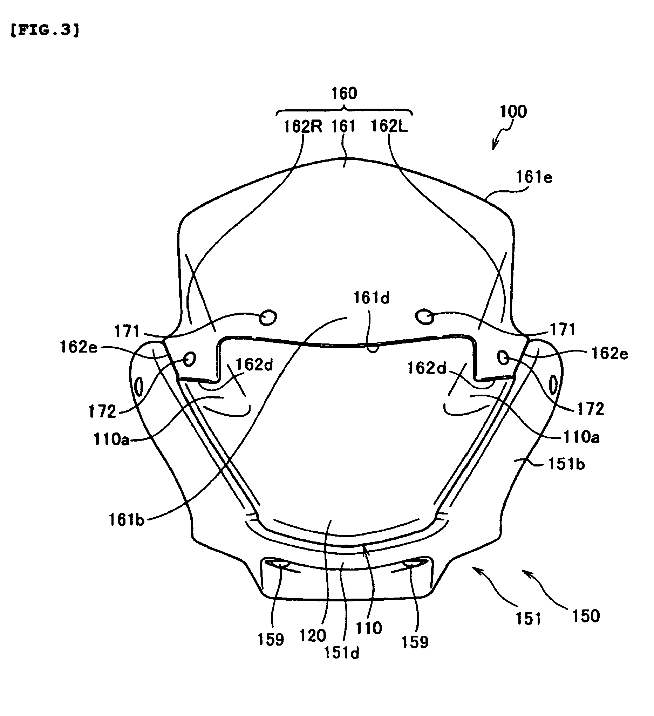

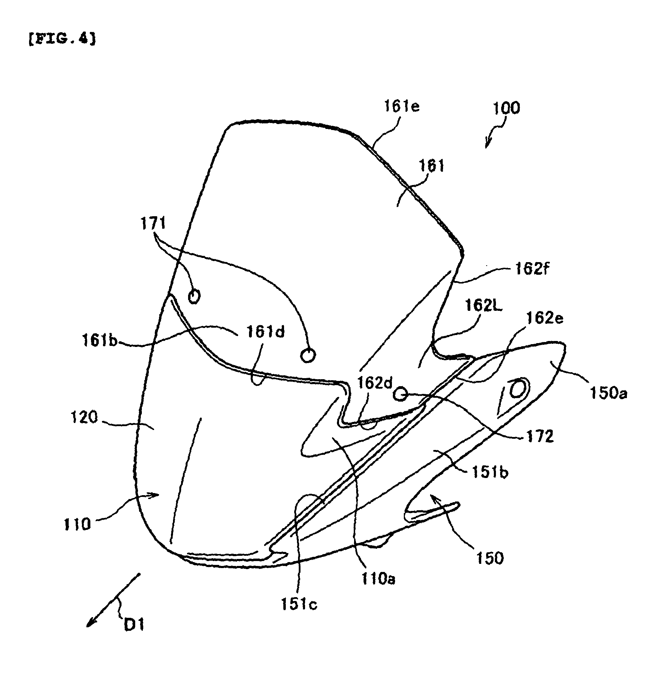

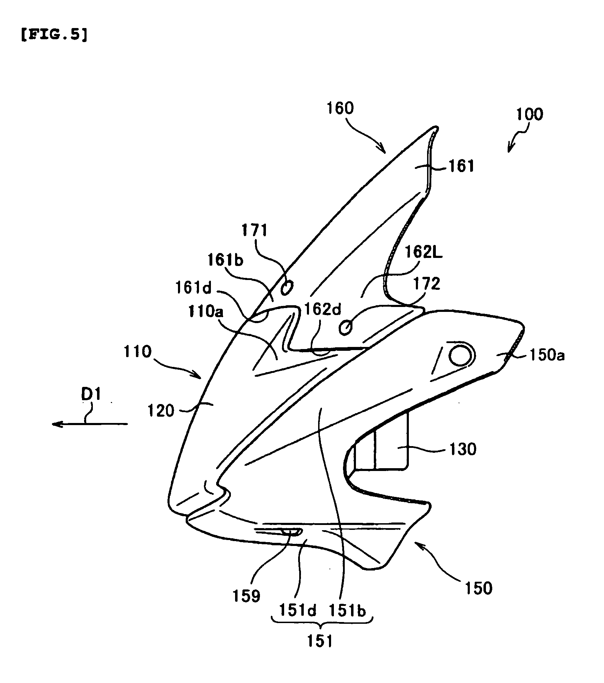

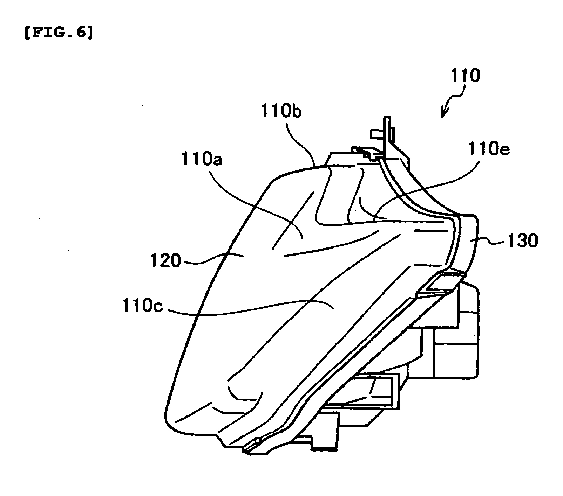

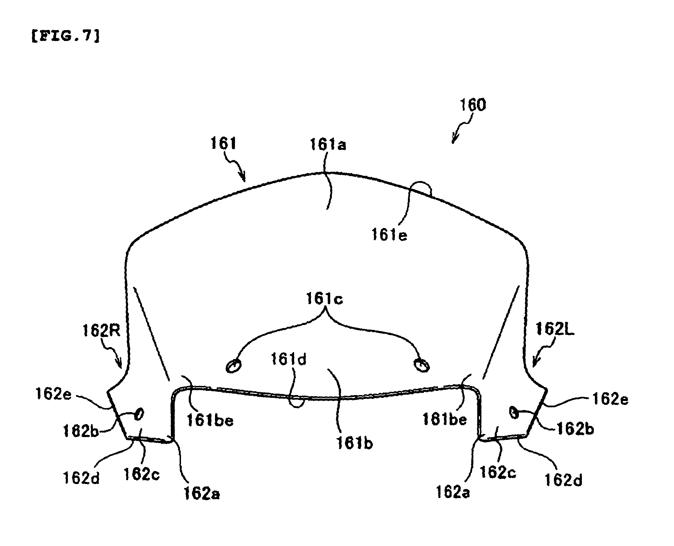

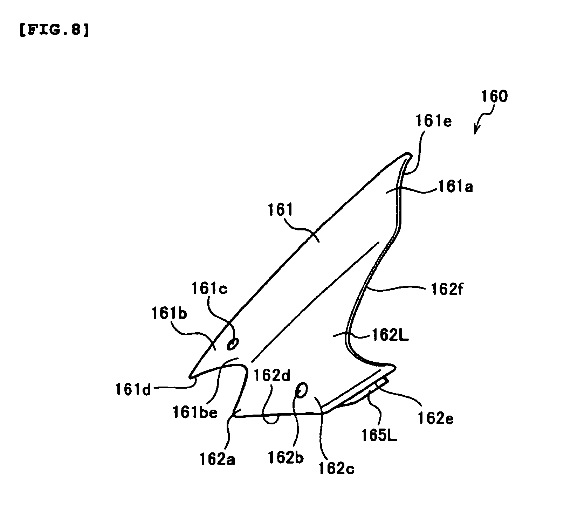

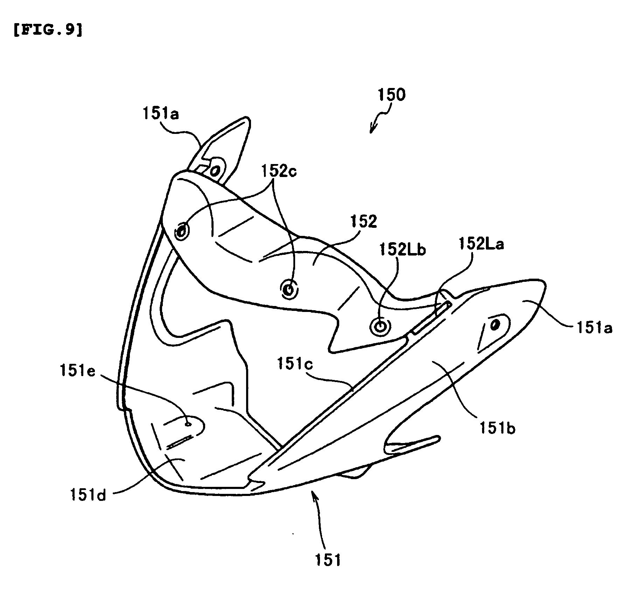

Fig. 3 is a front view of the front cowling 100. Fig. 4 is a perspective view of the front cowling 100. Fig. 5 is a left side view of the front cowling 100. Fig. 6 is a left side view of the headlight 110. Fig. 7 is a front view of the windscreen 160. Fig. 8 is a left side view of the windscreen 160. Fig. 9 is a perspective view of the lower cover 150.

The headlight 110 is a device that illuminates the front of the motorcycle 10. In this example, the headlight 110 is a multi-reflector type headlight. Specifically, as illustrated in FIG. 6, the headlight 110 includes a clear lens (front lens) 120 that has a flat surface shape without being subjected to lens cutting. Further, the headlight 110 includes a reflector 130 that reflects and distributes the light of bulb forwards. The clear lens 120 is assembled with the reflector 130 so as to be positioned at the front of the reflector 130 and to close the reflector 130 from the front thereof. That is, an outer peripheral shape of the clear lens 120 substantially coincides with an outer peripheral shape of the reflector 130, and an outer periphery of the clear lens 120 is attached to an outer periphery of the reflector 130.

As illustrated in Fig. 3, a width of an upper section of the headlight 110 is made wider than a width of a lower section of the headlight 110. That is, a width of the headlight 110 is made wider going upward of the motorcycle 10 from the lower section of the headlight 110, and the headlight 110 therefore exhibits a substantially triangular shape when the vehicle is viewed from the front thereof.

The lower cover 150 exhibits a frame shape (refer to Fig. 9) when the vehicle is viewed from the front thereof, and is formed so as to surround the headlight 110. That is, the lower cover 150 is arranged so as to cover the headlight 110 from below and to cover the headlight 110 from outside in the right and left directions. The lower cover 150 is attached to the headlight 110. In this example, attachment holes 151e are formed in a bottom portion 151d of the lower cover 150 (refer to Fig. 9), and fastening members 159 such as screws fitted to the attachment holes 151e from below are attached to a lower surface of the headlight 110 (refer to Fig. 3). In this connection, the lower cover 150 is made of resin.

The windscreen 160 is attached to the upper section of the headlight 110, and is positioned at the front of the seat 60 (refer to Fig. 1). The windscreen 160 is formed of a transparent or translucent member. Here, the transparent or translucent member refers to a member, such as transparent resin and glass, which has high light transmittance, and the transparent or translucent member may be tinted. Specifically, the transparent or translucent member just needs to have light transmittance that enables the rider to visually recognize the front through the windscreen 160. In this embodiment, the windscreen 160 is formed of transparent resin tinted black. As illustrated in Fig. 5, a surface of the windscreen 160 is smoothly continuous with a surface of the headlight 110. That is, the windscreen 160 is arranged so as to be flush with the clear lens 120 provided on a front surface of the headlight 110.

As illustrated in Fig. 3 or Fig. 4, the windscreen 160 has a front screen section 161 and side screen sections 162L and 162R. The front screen section 161 has a substantially flat plate shape, and a surface of the front screen section 161 is substantially flat. The front screen section 161 is arranged along a direction perpendicular to a straight ahead direction D1 of the motorcycle 10. In detail, the front screen section 161 extends upward and is inclined rearward from a lower edge 161d thereof. The side screen sections 162L and 162R are positioned right and left of the front screen section 161 and are continuous with the front screen section 161. The side screen sections 162L and 162R extend downward of the motorcycle 10 from right and left ends of the front screen section 161. That is, the front screen section 161 and the side screen sections 162L and 162R are continuous with each other in a state where the side screen sections 162L and 162R are bent. In other words, the side screen sections 162L and 162R are bent obliquely downward with respect to the front screen section 161 and extend downward from the front screen section 161.

A lower end portion 161b of the front screen section 161 is fastened to a forehead section 152 (refer to Fig. 9) of the lower cover 150 by fastening members (that is, screws) 171. Further, the side screen sections 162L and 162R are individually attached to the forehead section 152 by fastening members 172.

As illustrated in Fig. 7, the side screen sections 162L and 162R are recessed toward a center of the front cowling 100 (that is, center of reflector 130). That is, the side screen sections 162L and 162R are bent downward with respect to the front screen section 161, and are thereafter curved outward in the right and left directions. In this connection, as illustrated in Fig. 4 or Fig. 5, sections of the headlight 110 adjacent to the side screen sections 162L and 162R are also recessed toward the center of the front cowling 100. That is, recessed sections 110a are formed on right and left sides in an upper portion of the clear lens 120. The recessed sections 110a are located below (at the front of) the side screen sections 162L and 162R, and are formed so as to extend from the side screen sections 162L and 162R.

As illustrated in Fig. 5, the lower end portion 161b of the front screen section 161 is located further forward than the side screen section 162L in the longitudinal direction of the motorcycle 10. That is, the front screen section 161 is slightly bowed so as to swell forward, and the center portion of the front screen section 161 is positioned forward relative to right and left edges (hereinafter, side end portions) 161be of the front screen section 161. Since the side screen sections 162L and 162R extend rearward and obliquely downward from the side end portions 161be, the lower end portion 161b of the front screen section 161 is located forward relative to the side screen section 162L.

The windscreen 160 is arranged so that a lower edge thereof can go along an upper edge of the headlight 110. That is, as illustrated in Fig. 4 or Fig. 6, the front screen section 161 is arranged so that the lower edge 161d thereof can go along an upper edge 110b of the headlight 110. The side screen sections 162L and 162R are arranged so that lower edges 162d thereof can go along the upper edge 110b of the headlight 110.

As illustrated in Fig. 3, the lower edge 161d of the front screen section 161 is provided at a position higher than a height of the lower edges 162d of the side screen sections 162L and 162R. In detail, right and left sides of the upper section of the headlight 110 are recessed, and on the right and left of the upper section, upper edges 110e are provided at positions lower than the upper edge 110b (refer to Fig. 6). Then, the lower edge 161d of the front screen section 161 is in contact with the upper edge 110b, and the lower edges 162d of the side screen sections 162L and 162R are in contact with the upper edges 110e. As a result, positions of the lower edges 162d of the side screen sections 162L and 162R are set lower than the position of the lower edge 161d of the front screen section 161.

Note that as illustrated in Fig. 7, the lower edge of the windscreen 160 is also bent at boundaries between the front screen section 161 and the side screen sections 162L and 162R. That is, the lower edge of the windscreen 160 is bent downward from end portions of the lower edge 161d of the front screen section 161, thereafter extends downward, and reaches front end portions 162a of the lower edges 162d of the side screen sections 162L and 162R. As illustrated in Fig. 8, the lower edge of the windscreen 160 extends downward and is inclined forward from the end portions of the lower edge 161d, and the front end portions 162a are located forward relative to the side end portions 161be of the front screen section 161.

On a lower portion of the front screen section 161, a plurality (here, two) of attachment holes (fastened portions) 161c arrayed along the lower edge 161d are formed. Specifically, as illustrated in Fig. 7, in the lower end portion 161b of the front screen section 161, two attachment holes 161c apart from each other in the right and left directions are formed. The fastening members 171 illustrated in Fig. 4 are inserted through the attachment holes 161c, and are attached to the forehead section 152 of the lower cover 150 (refer to Fig. 9) . The front screen section 161 is formed so that the lower end portion 161b of the front screen section 161 can approach an upper end portion 161a of the front screen section 161 going outward in a vehicle width direction. That is, a longitudinal width of the front screen section 161 is set smaller going outward in the vehicle width direction.

As illustrated in Fig. 8, the lower end portion 161b of the front screen section 161 is located forward relative to the upper end portion 161a of the front screen section 161 in the longitudinal direction of the motorcycle 10. That is, as illustrated in Fig. 2 or Fig. 4, the front screen section 161 extends upward from the upper edge 110b of the headlight 110 and is inclined rearward.

In the lower portion of the side screen section 162L, the side screen section 162L has a plate piece-like insertion section 165L, and an attachment hole (fastened portion) 162b fastened to the forehead section 152 of the lower cover 150.

As illustrated in Fig. 3 or Fig. 8, the insertion sections 165L and the attachment holes 162b are formed on lower end portions 162c of the side screen sections 162L and 162R. In detail, the side screen sections 162L and 162R have, as edges thereof, right and left edges (hereinafter, side edges) 162e which extend rearward and obliquely upward from the lower edges 162d. The side edges 162e face front edges 151c of side portions 151b of the lower cover 150 described later (refer to Fig. 9) . The insertion sections 165L protrude from the side edges 162e toward the front edges 151c, and are inserted into notch portions 152La formed in the front edges 151c.

As illustrated in Fig. 8, the attachment hole 162b is located further forward than the insertion section 165L in the longitudinal direction of the motorcycle 10. Further, as illustrated in Fig. 3, positions of the attachment holes 162b are adjacent to the lower edges 162d of the side screen sections 162L and 162R. Then, the plurality of attachment holes 161c formed in the front screen section 161 and the attachment holes 162b formed in the side screen sections 162L and 162R are arrayed along the lower edge of the windscreen 160 (that is, lower edge 161d of front screen section 161 and lower edges 162d of side screen sections 162L and 162R) . In particular, in this example, the positions of the lower edges 162d are lower than that of the lower edge 161d, and the attachment holes 162b are formed at positions lower than those of the attachment holes 161c.

As illustrated in Fig. 8, the side screen sections 162L and 162R have, as edges thereof, rear edges 162f which extend downward from an upper edge (rear edge) of the front screen section 161. The rear edges 162f are recessed. Specifically, the rear edges 162f extend downward and are inclined forward from an end portion of an upper edge 161e, and are thereafter curved rearward.

As illustrated in Fig. 9, the lower cover 150 has a jaw section 151 and the forehead section 152. The jaw section 151 extends upward and obliquely rearward of the motorcycle 10 from below the headlight 110 illustrated in Fig. 3 to Fig. 6 through right and left directions of the headlight 110. That is, the jaw section 151 has the bottom portion 151d that covers the headlight 110 from below. Further, the jaw section 151 has the side portions 151b which are located right and left of the bottom portion 151d and extend upward and obliquely rearward from the bottom portion 151d so as to go along right and left edges 110c of the headlight 110 (refer to Fig. 6). The side portions 151b cover a rear section of the reflector 130 (refer to Fig. 6) of the headlight 110 from right and left.

The forehead section 152 is formed integrally with the jaw section 151. The forehead section 152 is bridged between right and left upper end portions 151a of the jaw section 151, and is located on the headlight 110 and rearward of the windscreen 160. Then, the forehead section 152 faces a back surface of a lower section of the windscreen 160. A shape of a lower edge of the forehead section 152 substantially coincides with a shape of the lower edge of the windscreen 160, that is, shapes of the lower edge 161d of the front screen section 161 and the lower edges 162d of the side screen sections 162L and 162R.

Attachment holes 152c and attachment holes 152Lb are formed in the forehead section 152. The attachment holes 152c correspond to positions of the attachment holes 161c of the front screen section 161. The fastening members 171 which fasten the attachment holes 161c and the attachment holes 152c together are inserted into the attachment holes, from the front. Further, the attachment holes 152Lb correspond to the positions of the attachment holes 162b formed in the side screen sections 162L and 162R. The fastening members 172 which fasten the attachment holes 162b and the attachment holes 152Lb together are inserted into those attachment holes from the front.

The forehead section 152 is located rearward of the clear lens 120 located on the front surface of the headlight 110 by a thickness of the windscreen 160. Therefore, when the front screen section 161 and the side screen sections 162L and 162R are attached to the forehead section 152, the front screen section 161 and the side screen sections 162L and 162R are individually flush with the clear lens 120.

The notch portions 152La are formed in boundary portions between the forehead section 152 and the jaw section 151. Specifically, upper portions of the side portions 151b of the jaw section 151 are located rearward of the side screen sections 162L and 162R, and extend along the side edges 162e. Then, upper portions of the front edges 151c of the side portions 151b face the side edges 162e of the side screen sections 162L and 162R. The notch portions 152La are formed in the upper portions of the front edges 151c. As illustrated in Fig. 6, each of the insertion sections 165L is inserted into the notch portion 152La from the front. In this regard, the upper end portions 151a of the side portions 151b extend rearward beyond the side screen sections 162L and 162R.

At the time of attachment of the windscreen 160 to the lower cover 150, an operator inserts the right and left insertion sections 165L into the notches 152La from the front, and thereby temporarily fixes the windscreen 160 to the lower cover 150. Thereafter, the operator fits the fastening members 171 and 172 such as the screws to the attachment holes 161c, 162b, 152c and 152Lb from the front, and fastens the windscreen 160 and the lower cover 150 together.

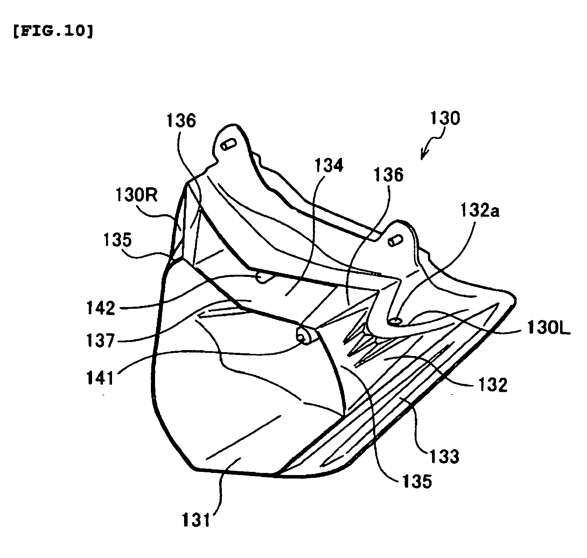

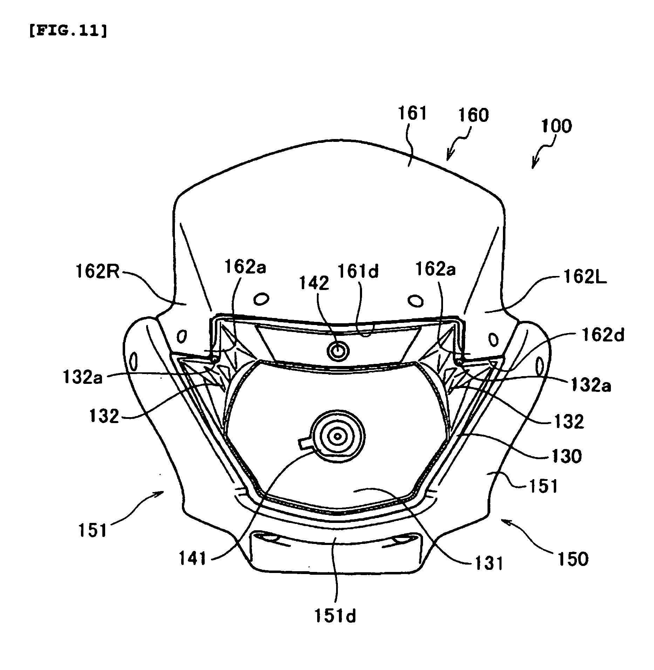

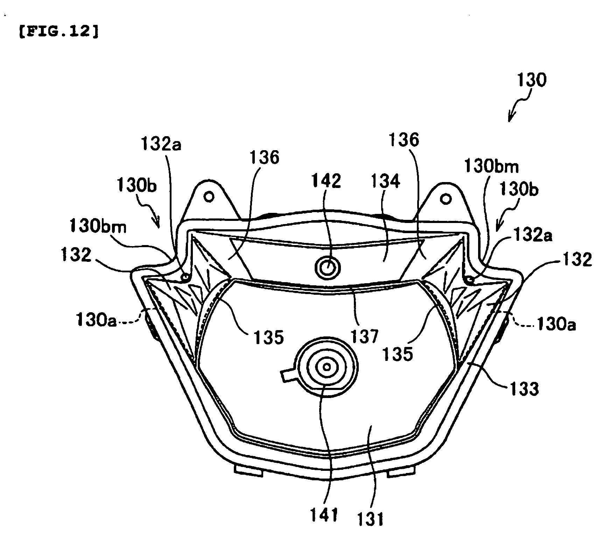

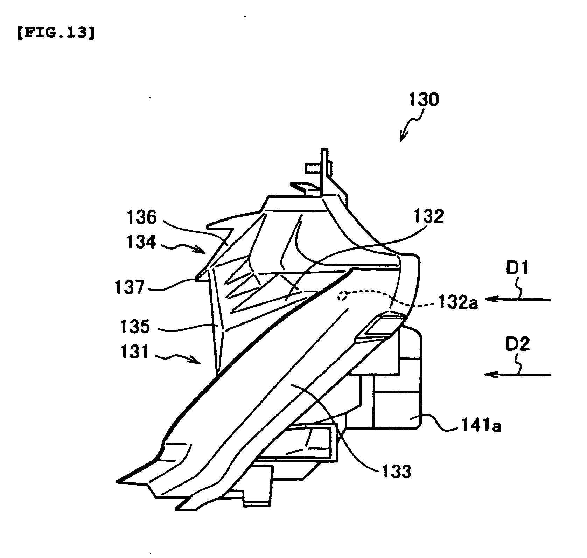

As described above, the headlight 110 includes the reflector 130. Fig. 10 is a perspective view of the reflector 130. Fig. 11 and Fig. 12 are front views of the reflector 130. Fig. 11 illustrates the reflector 130 to which the lower cover 150 and the windscreen 160 are attached, while Fig. 12 illustrates the reflector 130 from which the lower cover 150 and the windscreen 160 are detached. Fig. 13 is a side view of the reflector 130.

As illustrated in Fig. 10 or Fig. 11, a headlight bulb 141 and a position lamp 142 are attached to the reflector 130. The position lamp 142 is located above and further forward than the headlight bulb 141. An amount of radiated light of the position lamp 142 is set smaller than that of the headlight bulb 141.

As illustrated in Fig. 10 or Fig. 12, the reflector 130 has a reflector section 131, upper decorated sections 132 (low reflection sections), outer non-decorated sections 133, and a position lamp section 134. The reflector 130 is formed by performing injection molding of a resin material. A width of an upper section of the reflector 130 is set wider than a width of a lower section of the reflector 130. Specifically, a width of the reflector 130 is set wider going upward from the lower section of the reflector 130.

The reflector section 131 is formed on the periphery of the headlight bulb 141. Specifically, the reflector section 131 is formed into a conical shape in which a diameter is increased as going forward from the headlight bulb 141. A reflection material is evaporated on a surface of the reflector section 131, and the reflector section 131 reflects the bulb light radiated by the headlight bulb 141 forward of the motorcycle 10. Further, the surface of the reflector section 131 is not flat, a large number of minute undulations are formed on the surface, and the reflector section 131 has a function to distribute the bulb light radiated by the headlight bulb 141.

The upper decorated sections 132 are formed on both right and left sides of an upper portion of the reflector section 131. The reflection material is vapor-deposited on surfaces of the upper decorated section 132. In the upper decorated section 132, the reflection of the bulb light is suppressed more than in the reflector section 131.

Specifically, the reflector section 131 and the upper decorated sections 132 are partitioned from each other by erected walls 135. The erected walls 135 protrude forward on boundary sections between the reflector section 131 and the upper decorated sections 132. The bulb light radiated by the headlight bulb 141 is interrupted by the erected walls 135, and accordingly, the reflection of the bulb light on the upper decorated sections 132 is suppressed.

The outer non-decorated section 133 surrounds, from the outside, the reflector section 131, the upper decorated sections 132 and the position lamp section 134. Vent holes 132a are formed at positions on the outer non-decorated section 133, which are adjacent to the upper decorated sections 132. The vent holes 132a are formed along a longitudinal direction of the motorcycle 10, and are open rearward and forward of the reflector 130. On other words, the vent holes 132a penetrate the reflector 130 in the longitudinal direction, and an inside (space surrounded by the clear lens 120 and the reflector 130) of the headlight 110 and the outside of the headlight 110 communicate with each other through the vent holes 132a.

Two vent holes 132a are formed in the reflector 130. In this example, the vent holes 132a are individually formed in an upper left section 130L and upper right section 130R of the reflector 130.

The position lamp section 134 is formed on the periphery of the position lamp 142, and is located between the right and left upper decorated sections 132. The reflection material is evaporated also on a surface of the position lamp section 134, and the position lamp section 134 reflects light radiated by the position lamp 142 forward of the motorcycle 10.

The reflector section 131 and the position lamp section 134 are partitioned from each other by an erected wall 137. Specifically, the erected wall 137 protrudes forward on a boundary section between the reflector section 131 and the position lamp section 134.

Further, the position lamp section 134 and the upper decorated sections 132 are partitioned from each other by erected walls 136. Specifically, the erected walls 136 protrude forward on boundary portions between the position lamp section 134 and the upper decorated sections 132.

The side screen sections 162L and 162R which constitute the windscreen 160 project forward. Specifically, the side screen sections 162L and 162R are formed so that the front end portions 162a thereof project forward (refer to Fig. 4).

Then, as illustrated in Fig. 11, the side screen sections 162L and 162R partially overlap the upper decorated sections 132 of the reflector 130 in the front view of the vehicle. Specifically, the front end portions 162a of the side screen sections 162L and 162R overlap edges of the upper decorated sections 132. The vent holes 132a are formed at positions opposite to the side screen sections 162L and 162R while sandwiching the clear lens 120 therebetween. In other words, the vent holes 132a are formed in the vicinity of the upper decorated section 132.

As illustrated in Fig 11 and Fig. 12, the upper decorated sections 132 have regions (hereinafter, exposed regions) 130a which are not covered with the windscreen 160. The vent holes 132a are formed adjacent to the exposed regions 130a.

As illustrated in Fig. 12, recessed sections 130b recessed toward the center of the reflector 130 are formed on right and left portions of an upper edge of the reflector 130. The recessed sections 130b are located inside of the side screen sections 162L and 162R. The vent holes 132a are formed adjacent to the most recessed portions 130bm in the recessed sections 130b.

As illustrated in Fig. 13, the vent holes 132a are open in the direction D1. Further, at the time of assembling a headlight bulb unit 141a including the headlight bulb 141 with the reflector 130, the headlight bulb 141 is inserted into the reflector 130 along a direction D2. Here, the direction D1 and the direction D2 are substantially the same direction, and in particular, substantially coincide with the forward of the motorcycle 10.

As described above, the windscreen 160 includes: the front screen section 161 arranged so as to extend upward and be inclined rearward from the headlight 110; and the right and left side screen sections 162L and 162R located right and left of the front screen section 161 and arranged so as to be bent obliquely downward with respect to the front screen section 161. In such a way, it becomes easy to ensure the rigidity of the windscreen. For example, in comparison with the flat plate-shaped windscreen, the rigidity thereof can be enhanced. Further, the attachment holes 161c and 162b, through an intermediation of which the windscreen 160 is attached to the lower cover 150, are formed in the lower portion of the front screen section 161 and the lower portions of the side screen sections 162L and 162R. In such a way, sufficient support strength can be ensured for the lower section of the windscreen 160. Further, the lower edges 162d of the side screen sections 162L and 162R are located at positions lower than the lower edge 161d of the front screen section 161, and the attachment holes 162b of the side screen sections 162L and 162R are provided at positions lower than the attachment holes 161c of the front screen section 161. In such a way, the support strength of the windscreen 160 can be further enhanced. For example, in comparison with a mode in which the plurality of attachment holes are located at the same height, the support strength of the windscreen 160 can be enhanced.

Further, in the motorcycle 10, the lower cover 150 has the forehead section 152 that is located above the headlight 110 and faces the back surface of the windscreen 160. Then, the windscreen 160 is attached to the forehead section 152 by the plurality of attachment holes 161c and 162b. In such a way, it becomes possible to stably support the windscreen 160.

Further, in the motorcycle 10, the lower cover 150 is arranged along the right and left side edges 162e of the side screen sections 162L and 162R, and the insertion sections 165L inserted into the lower cover 150 are formed on the side edges 162e of the side screen sections 162L and 162R. In such a way, the attachment strength of the windscreen can be further enhanced.

Further, in the motorcycle 10, the side screen sections 162L and 162R are bent downward and extend from the front screen section 161, and are thereafter curved outward in the right and left directions, respectively. In such a way, the strength of the windscreen 160 can be enhanced.

Further, in the motorcycle 10, the front screen section 161 is arranged so as to be flush with the front surface (clear lens 120 in the above description) of the headlight 110. In such a way, airflow formed along the front screen section 161 and the headlight 110 can be made smooth.

Further, in the motorcycle 10, not only the front screen section 161 but also the side screen sections 162L and 162R which are continuous with the front screen section 161 are formed of the transparent or translucent member. Therefore, even in a very forwardly-bent posture, the rider can visually recognize forward through the front screen section 161, and can also visually see obliquely forward through the side screen sections 162L and 162R.

Further, in the motorcycle 10, the lower end portion 161b of the front screen section 161 is provided forward relative to the side screen sections 162L and 162R, and is attached to the lower cover 150. Therefore, while ensuring a forward visual field of the rider, obliquely forward visual fields thereof can also be ensured.

Further, in the motorcycle 10, the insertion section 165L of the side screen section 162L is inserted into the notch portion 152La formed in the lower cover 150. Therefore, in comparison with the case of using the fastening member or the like, the obliquely forward visual field of the rider can be further ensured.

Further, in the motorcycle 10, the attachment hole 162b of the side screen section 162L is formed further forward than the insertion section 165L in the longitudinal direction of the motorcycle 10. Further, the surface of the front screen section 161 is substantially flat, and the lower end portion 161b of the front screen section 161 is located further forward than the upper end portion 161a of the front screen section 161 in the longitudinal direction of the motorcycle 10.

Specifically, the front screen section 161 is inclined rearward, and the attachment hole 162b into which the fastening member 172 is inserted is provided in a front portion of the side screen section 162L, whereby the attachment strength of the side screen section 162L can be enhanced while ensuring the obliquely forward visual field of the rider.

Further, in the motorcycle 10, the headlight 110 is provided below the windscreen 160. Further, the lower end portion 161b of the front screen section 161 approaches the upper end portion 161a of the front screen section 161 going outward in the vehicle width direction. The front end portions 162a of the side screen sections 162L and 162R are located forward relative to the side end portions 161b of the front screen section 161. In such a way, the obliquely forward visual fields of the rider can be ensured while ensuring a size of the headlight 110.

Further, in the motorcycle 10, the windscreen 160 has the attachment holes 161c and the attachment holes 162b fastened to the lower cover 150. The attachment holes 161c and the attachment holes 162b are formed only in the lower end portion 161b and lower end portions 162c of the windscreen 160, respectively. Specifically, the attachment holes are not formed in portions other than the lower end portion 161b and lower end portions 162c of the windscreen 160, and accordingly, the forward visual field and obliquely forward visual fields of the rider can be ensured more reliably.

Further, in the motorcycle 10, the front screen section 161 and the side screen sections 162L and 162R are continuous with each other in the state where the side screen sections 162L and 162R are bent. Accordingly, in comparison with the case where the side screen sections 162L and 162R are not bent, the rigidity of the boundary portions between the front screen section 161 and the side screen sections 162L and 162R is enhanced. Therefore, the forward visual field and obliquely forward visual fields of the rider can be ensured while suppressing vibrations and the like of the windscreen 160, which are caused by the running wind.

Further, according to the motorcycle 10, the conventional problems as described below can be solved. Specifically, a structure is provided, in which the headlight is ventilated from the inside to the outside so as to prevent the headlight from fogging due to moisture having entered the inside of the headlight. For example, a structure is known in which a vent hole is formed above a headlight so as to prevent fogging of a headlight cover of a front cowling that includes the headlight. However, in the front cowling that has the headlight, the vent hole is formed above the headlight, and accordingly, the vent hole is visually noticable from the outside through the transparent headlight cover. This has resulted in a problem that exterior appearance quality of the straddle-type vehicle is lowered. In particular, in the case of the multi-reflector type headlight widely used at present, that is, such a headlight that uses the front lens having the flat surface shape without being subjected to the lens cutting, and uses the reflector serving both for the reflection and distribution of the bulb light radiated by the headlight bulb, the above-mentioned problem has been particularly significant since the reflector is likely to be visually noticerd in comparison with the conventional headlight that uses a front lens subjected to such cutting.

In terms of this, in the motorcycle 10, the vent holes 132a are formed at the positions opposite to the windscreen 160 while interposing the clear lens 120 therebetween. That is, the vent holes 132a are formed in the vicinities of the upper decorated sections 132 in which the reflection of the bulb light is suppressed. The vent holes 132a are formed in the vicinities of the upper decorated sections 132, that is, at dark positions in the headlight 110. Therefore, the vent holes 132a are less likely to be visually noticed even in the case of using the clear lens 120 that is not subjected to the lens cutting. In such a way, even in the case of using the multi-reflector type headlight 110, the exterior appearance of headlight 110 can be enhanced while suppressing the fogging of the headlight 110 due to the moisture.

Further, in the motorcycle 10, the vent holes 132a are formed adjacent to the exposed regions 130a as regions of the upper decorated sections 132, which are not covered with the windscreen 160. As described above, the radiated light of the headlight bulb 141 and the position lamp 142 is less likely to reach the upper decorated sections 132, and moisture is less likely to be vaporized in the upper decorated sections 132, and accordingly, the moisture in the headlight 110 is likely to be accumulated in the upper decorated sections 132. The fogging of the headlight 110 can therefore be prevented effectively because the vent holes 132a are formed adjacent to the exposed regions 130a of the upper decorated sections 132.

Further, in the motorcycle 10, the vent holes 132a are formed adjacent to the recessed sections 130b of the reflector 130, and specifically, adjacent to the most recessed portions 130bm in the recessed sections 130b. In comparison with the flat sections, even if the vent holes 132a are formed in the recessed sections 130b, they are less likely to be conspicuous. Accordingly, the vent holes 132a are formed adjacent to the recessed sections 130b, whereby the exterior appearance quality of the headlight 110 can be further enhanced.

Further, in the motorcycle 10, the vent holes 132a are individually formed in the upper left section 130L and upper right section 130R of the reflector 130. Accordingly, air that contains moisture and is warmed up by the headlight bulb 141 can be efficiently exhausted from the upper sections of the reflector 130 through the vent holes 132a. Hence, the fogging of the headlight 110 can be prevented far more reliably. Further, since the two vent holes 132a are formed, the air can be exhausted far more efficiently in comparison with the case where there is only one vent holes 132a.

Further, in the motorcycle 10, the reflector 130 is formed by performing injection molding of a resin material, and the direction (direction D1) where the vent holes 132a are open is substantially the same as an insertion direction (direction D2) of the headlight bulb 141 into the reflector 130. Accordingly, at the time of performing injection molding of a resin material, a die can be pulled off from the cured resin material, and the reflector 130 can be manufactured easily even in the case of forming the vent holes 132a.

Note that the present invention is not limited to the motorcycle 10 described above, and various modifications can be made thereto. For example, in the motorcycle 10, the windscreen 160 is formed of the transparent resin tinted black. However, the windscreen 160 may be formed of non-tinted transparent resin or glass.

Further, in the motorcycle 10, the windscreen 160 is attached to the forehead section 152 of the lower cover 150, but the windscreen 160 may be attached to the headlight 110.

Further, in the motorcycle 10, the attachment hole 162b of the side screen section 162L is formed further forward than the insertion section 165L in the longitudinal direction of the motorcycle 10. However, the attachment hole 162b may be formed rearward relative to the insertion section 165L. Further, at least one of the insertion section 165L and the attachment hole 162b may be omitted.

Further, in the motorcycle 10, the surface of the front screen section 161 is substantially flat, but does not necessary have to be substantially flat.

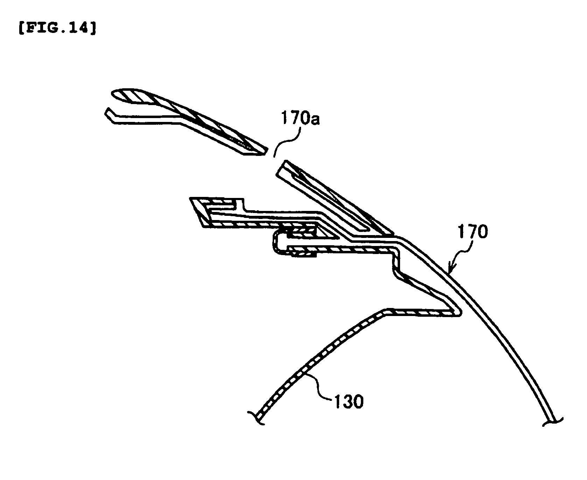

Further, in the motorcycle 10, the vent holes 132a are formed in the reflector 130. However, a construction as described below may be adopted without forming the vent holes 132a in the reflector 130. Fig. 14 is a cross-sectional view of a front cowling according to another embodiment. In the front cowling illustrated in Fig. 14, a vent hole 170a is located above the reflector 130, and is formed in a headlight housing 170.

Further, in the motorcycle 10, the windscreen 160 is used as a shielding member that overlaps the upper decorated sections 132. However, the lower cover 150 may be partially formed so as to project with respect to the upper left section 130L and upper right section 130R of the reflector 130, and the projecting sections of the lower cover 150 may be used as such shielding members. Alternatively, a cover member separate from the windscreen 160 and the lower cover 150 may be used as the shielding member.

Further, in the motorcycle 10, the vent holes 132a are formed along the longitudinal direction of the motorcycle 10, and are open from the rear of the reflector 130 toward the front thereof. However, the vent holes 132a may be formed along other directions. For example, the vent holes 132a may be formed along the vehicle width direction of the motorcycle 10.

Further, in the motorcycle 10, the vent holes 132a are individually formed in the upper left section 130L and upper right section 130R of the reflector 130. However, the vent hole 132a may be formed only in either one of the upper left section 130L and the upper right section 130R. Alternatively, in the case where the low reflection sections are arranged below the reflector section 131, the vent holes 132a may be formed in the lower section of the reflector 130.

## Claims

1. A straddle-type vehicle (10), comprising:
a headlight (110) arranged at a front of a steering head pipe;
a cover (150) arranged so as to cover a rear section of the headlight (110); and
a windscreen (160) arranged above the headlight, wherein:
the windscreen comprises:
a front screen section (161) arranged so as to extend upward from the headlight and be inclined rearward; and
right and left side screen sections (162R, 162L) located right and left of the front screen section (161) and arranged so as to be bent obliquely downward with respect to the front screen section (161);
attachment portions (161c, 162b) attached to the headlight (110) or the cover (150) are provided in a lower portion (161b) of the front screen section (161) and lower portions of the side screen sections (162L,162R), and
lower edges (162d) of the side screen sections (162L,162R) are located at positions lower than a lower edge (161d) of the front screen section (161); and
the attachment portions (162b) of the side screen sections (162L,162R) are located at positions lower than the attachment portions (161c) of the front screen section (161).

2. A straddle-type vehicle (10) according to claim 1, wherein:
the cover (150) has a forehead section (152) that is located above the headlight (110) and faces a back surface of the windscreen (160), and
a plurality of the attachment portions (161c,162b) are attached to the forehead section (152).

3. A straddle-type vehicle (10) according to claim 2, wherein:
the cover (150) is arranged along right and left edges (162e) of the side screen sections (162L,162R); and
insertion sections (165L) inserted into the cover (150) are formed on the right and left edges (162e) of the side screen sections (162L,162R).

4. A straddle-type vehicle (10) according to claim 1, wherein the side screen sections (162L,162R) are bent downward and extend from the front screen section (161), and are thereafter curved outward in right and left directions, respectively.

5. A straddle-type vehicle (10) according to claim 1, wherein the front screen section (161) is arranged so as to be flush with a front surface (120) of the headlight (110).

6. A straddle-type vehicle (10) according to claim 5, wherein:
the cover (150) has a forehead section (152) that is arranged along an upper edge of the headlight (110) and faces a back surface of the windscreen (160) ; and
the plurality of attachment portions (161c,162b) are attached to the forehead section (152).

## Patentansprüche

1. Ein Fahrzeug vom rittlings zu fahrenden Typ (10), das folgende Merkmale aufweist:
einen Scheinwerfer (110), der an einer Vorderseite einer Hauptlenkleitung angeordnet ist;
eine Abdeckung (150), die dazu angeordnet ist, einen hinteren Abschnitt des Scheinwerfers (110) abzudecken; und
einen über dem Scheinwerfer angeordneten Windschutz (160), wobei:
der Windschutz folgende Merkmale aufweist:
einen vorderen Schutzabschnitt (161), der dazu angeordnet ist, sich von dem Scheinwerfer nach oben zu erstrecken und nach hinten geneigt zu werden; und
einen rechten und einen linken seitlichen Schutzabschnitt (162R, 162L), die zur Rechten und zur Linken des vorderen Schutzabschnitts (161) positioniert sind und dazu angeordnet sind, bezüglich des vorderen Schutzabschnitts (161) schräg nach unten gebogen zu werden;
Befestigungsabschnitte (161c, 162b), die an dem Scheinwerfer (110) oder der Abdeckung (150) befestigt sind, sind in einem unteren Teil (161b) des vorderen Schutzabschnitts (161) und in unteren Abschnitten der seitlichen Schutzabschnitte (162L, 162R) vorgesehen sind, und
Unterkanten (162d) der seitlichen Schutzabschnitte (162L, 162R) sind an Positionen angeordnet, die niedriger sind als eine Unterkante (161d) des vorderen Schutzabschnitts (161); und
die Befestigungsabschnitte (162b) der seitlichen Schutzabschnitte (162L, 162R) sind an Positionen angeordnet, die niedriger sind als die Befestigungsabschnitte (161c) des vorderen Schutzabschnitts (161).

2. Ein Fahrzeug vom rittlings zu fahrenden Typ (10) gemäß Anspruch 1, bei dem:
die Abdeckung (150) einen Stirnabschnitt (152) aufweist, der über dem Scheinwerfer (110) positioniert ist und einer rückwärtigen Oberfläche des Windschutzes (160) zugewandt ist, und
eine Mehrzahl der Befestigungsabschnitte (161c, 162b) an dem Stirnabschnitt (152) befestigt sind.

3. Ein Fahrzeug vom rittlings zu fahrenden Typ (10) gemäß Anspruch 2, bei dem:
die Abdeckung (150) entlang einer rechten und einer linken Kante (162e) der seitlichen Schutzabschnitte (162L, 162R) angeordnet ist; und
in die Abdeckung (150) eingefügte Einfügungsabschnitte (165L) an der rechten und der linken Kante (162e) der seitlichen Schutzabschnitte (162L, 162R) gebildet sind.

4. Ein Fahrzeug vom rittlings zu fahrenden Typ (10) gemäß Anspruch 1, bei dem die seitlichen Schutzabschnitte (162L, 162R) nach unten gebogen sind und sich von dem vorderen Schutzabschnitt (161) erstrecken und danach in einer nach rechts beziehungsweise nach links verlaufenden Richtung nach außen gekrümmt sind.

5. Ein Fahrzeug vom rittlings zu fahrenden Typ (10) gemäß Anspruch 1, bei dem der vordere Schutzabschnitt (161) dahin gehend angeordnet ist, mit einer vorderen Oberfläche (120) des Scheinwerfers (110) bündig abzuschließen.

6. Ein Fahrzeug vom rittlings zu fahrenden Typ (10) gemäß Anspruch 5, bei dem:
die Abdeckung (150) einen Stirnabschnitt (152) aufweist, der entlang einer Oberkante des Scheinwerfers (110) angeordnet ist und einer rückwärtigen Oberfläche des Windschutzes (160) zugewandt ist; und
die Mehrzahl von Befestigungsabschnitten (161c, 162b) an dem Stirnabschnitt (152) befestigt sind.

## Revendications

1. Véhicule du type à enfourcher (10), comprenant:
un phare (110) disposé à l'avant d'un tube principal de guidage;
un couvercle (150) disposé de manière à recouvrir un segment arrière du phare (110); et
un abrivent (160) disposé au-dessus du phare, où:
l'abrivent comprend:
un segment d'abrivent avant (161) disposé de manière à s'étendre vers le haut depuis le phare et à être incliné vers l'arrière; et
des segments d'abrivent latéraux droit et gauche (162R, 162L) situés à droite et à gauche du segment d'abrivent avant (161) et disposés de manière à être recourbés obliquement vers le bas par rapport au segment d'abrivent avant (161);
des parties de fixation (161c, 162b) fixées au phare (110) ou au couvercle (150) sont prévues dans une partie inférieure (161b) du segment d'abrivent avant (161) et aux parties inférieures des segments d'abrivent latéraux (162L, 162R); et
les bords inférieurs (162d) des segments d'abrivent latéraux (162L, 162R) sont situés en des positions inférieures à un bord inférieur (161d) du segment d'abrivent avant (161); et
les parties de fixation (162b) des segments d'abrivent latéraux (162L, 162R) sont situées en des positions inférieures aux parties de fixation (161c) du segment d'abrivent avant (161).

2. Véhicule du type à enfourcher (10) selon la revendication 1, dans lequel:
le couvercle (150) présente un segment de front (152) qui est situé au-dessus du phare (110) et fait face à une surface arrière de l'abrivent (160); et
une pluralité de parties de fixation (161c, 162b) sont fixées au segment de front (152).

3. Véhicule du type à enfourcher (10) selon la revendication 2, dans lequel:
le couvercle (150) est disposé le long des bords droits et gauches (162e) des segments d'abrivent latéraux (162L, 162R); et
des segments d'insertion (165L), insérés dans le couvercle (150), sont formés sur les bords droits et gauches (162e) des segments d'abrivent latéraux (162L, 162R).

4. Véhicule du type à enfourcher (10) selon la revendication 1, dans lequel les segments d'abrivent latéraux (162L, 162R) sont recourbés vers le bas et s'étendent à partir du segment d'abrivent avant (161), et sont ensuite courbés vers l'extérieur dans des directions respectivement à droite et à gauche.

5. Véhicule du type à enfourcher (10) selon la revendication 1, dans lequel le segment d'abrivent avant (161) est disposé de manière à être à fleur avec une surface avant (120) du phare (110).

6. Véhicule du type à enfourcher (10) selon la revendication 5, dans lequel:
le couvercle (150) présente un segment de front (152) qui est disposé le long d'un bord supérieur du phare (110) et fait face à une surface arrière de l'abrivent (160); et
la pluralité de parties de fixation (161c, 162b) sont fixées au segment de front (152).
